# EUROPÄISCHE PATENTSCHRIFT

(11) **EP 0 458 047 B1**
(45) Veröffentlichungstag und Bekanntmachung des Hinweises auf die Patenterteilung: **28.12.1994**
(21) Anmeldenummer: 91105581.2
(22) Anmeldetag: 09.04.1991
(51) Int. Cl.: B23B 51/04, B23B 51/10

(54) **Fräskrone**
Milling cutter
Fraise

(30) Priorität: 25.05.1990 DE 4016927
(43) Veröffentlichungstag der Anmeldung: 27.11.1991
(73) Patentinhaber: Hawera Probst GmbH + Co., 88212 Ravensburg (DE)
(72) Erfinder: Haussmann, August, W-7981 Oberzell (DE); Metz, Hans, W-7981 Vogt (DE)
(74) Vertreter: Patentanwälte Eisele, Otten & Roth

(56) Entgegenhaltungen:
- DE-A- 2 410 120
- DE-A- 3 214 209
- DE-A- 3 423 522
- DE-U- 8 710 810

## Beschreibung

Die Erfindung betrifft eine Fräskrone zur Herstellung von kreiszylindrischen Wandausnehmungen z. B. für die Montage von Dosen einer Elektroinstallation, insbesondere von Hohlwanddosen nach dem Oberbegriff des Anspruchs 1.

### Stand der Technik:

Aus der DE-OS 35 30 296 A1 ist ein Werkzeug bekannt geworden, mit welchem Ausnehmungen insbesondere für Hohlwanddosen herstellbar sind. Um bei derartigen Bohrungen eine Randversenkung zur Aufnahme des nach außen abgewinkelten Flansches der Hohlwanddose zu ermöglichen, wird ein ringförmiger, mit Schneidzähnen versehener Randversenker zwischen dem Sägeblatt und dem Grundkörper eingesetzt, wobei der Grundkörper eine nach vorn offene umlaufende Nut zur Aufnahme des kreiszylindrischen Sägeblatts aufweist. Dabei erfolgt die Verbindung zwischen Grundkörper und Sägeblatt über einen Bajonettverschluß, in dessen Ausnehmungen am kreiszylindrischen Sägeblatt radiale Zapfen des Randversenkers hineinragen und eine formschlüssige Mitnahme bewirken.

In der DE-OS 35 30 296 A1 ist der Grundkörper, das kreiszylindrische Sägeblatt und der Randversenker mehrstückig ausgeführt. Dies hat im allgemeinen den Vorteil, daß Sägeblätter mit unterschiedlichem Durchmesser in jeweils angepaßten, nach vorn offenen umlaufenden Nuten im Grundträger einsetzbar sind, so daß Bohrungen unterschiedlichen Durchmessers herstellbar sind.

Die für den Anwendungszweck der Fräskrone herzustellenden Bohrungen für Hohlwanddosen können Jedoch weitgehend mit einem konstanten Bohrkronendurchmesser hergestellt werden, da die Hohlwanddosen in ihren Abmessungen mit ca. 68 mm genormt sind. Eine Ausbildung des Grundkörpers mit mehreren, im Durchmesser unterschiedlichen Sägeblattdurchmessern ist deshalb im allgemeinen nicht erforderlich. Es ist deshalb auch eine Bohrkrone bekannt geworden, die in gleichem Aufbau wie der eingangs geschilderte Stand der Technik, jedoch unzerlegbar hergestellt ist. Beide Ausführungsformen sind grundsätzlich mit einer radial nach außen ragenden Anschlagsfläche ausgestattet, die von den Zähnen des umlaufenden Randversenkers geringfügig axial überragt wird. Das Einsatzgebiet der einteiligen Bohrkrone ist auf den genannten Anwendungszweck weitgehend begrenzt.

Die bekannten Bohrkronen haben weiterhin den Nachteil, daß insbesondere die Verzahnung des Randversenkers durch die Vielzahl der kleinen Zähne derart ausgebildet ist, daß diese bei der Bearbeitung von insbesondere kunststoffbeschichteten Spanplatten leicht verschmiert bzw. die Zähne sich schnell zusetzen. Hierdurch muß die Verzahnung des Randversenkers ständig gereinigt werden, was insbesondere bei nicht zerlegbarer Fräskrone außerordentlich schwierig und mühsam ist. Aufgrund der neben der Verzahnung des Randversenkers liegenden, umlaufenden, kreiszylindrischen Anschlagsfläche ist auch eine Abfuhr des Spanguts nur unbefriedigend möglich.

Aus der DE-A-32 14 209 ist eine gattungsgemäße Fräskrone bekanntgeworden, die in ihrer Wirkungsweise dem Gegenstand der DE-35 30 296 A1 entspricht. Der Randversenker ist jedoch als kreiszylindrische Platte ausgebildet, die zwischen dem Boden der topfförmig ausgebildeten Bohrkrone und einem Aufnahmeflansch für einen Maschinen-Einspannschaft eingespannt ist. Hierdurch wird eine erhöhte Stabilität der Fräskrone erzielt.

### Vorteile der Erfindung:

Die erfindungsgemäße Fräskrone mit den kennzeichnenden Merkmalen des Anspruchs 1 hat demgegenüber den Vorteil, daß eine vielseitig einsetzbare Fräskrone geschaffen wird, die u. a. auch zur Herstellung von normalen Wandausnehmungen oder Durchbrüchen, wie z. B. Bohrungen für die Montage von genormten Hohlwanddosen einer Elektroinstallation, verwendbar ist, mit der bei Bedarf darüber hinaus auch Einfräsungen für eine Randversenkung des nach außen abgewinkelten Abstützflansches der einzusetzenden Hohlwanddosen herstellbar sind. Hierfür ist die Fräskrone zunächst in an sich bekannter Weise als einstückige, topfförmige Bohrkrone ausgebildet, die in ihrem Boden einen einschraubbaren Einspannschaft für die Maschinenaufnahme aufweist. In den Einspannschaft kann in einer vorgesehenen Zentralbohrung ein Zentrierbohrer eingesetzt werden.

Diese an sich bekannte Bohrkrone wird erfindungsgemäß dadurch in ihrem Anwendungszweck erweitert, daß auf den Boden der topfförmigen Bohrkrone eine zweite, ebenfalls topfförmige Lochrand-Bohrkrone aufgesetzt wird, die zwischen dem Boden der ersten Bohrkrone und dem Einspannschaft verspannbar ist. Die zusätzliche Lochrand-Bohrkrone weist an ihrem Umfang mehrere einzelne Hartmetall-Schneidzähne auf, die die zusätzlich vorgesehene Anschlagsfläche an der Lochrand-Bohrkrone um den Betrag überragen, der der Tiefe der herzustellenden Einfräsung bzw. Versenkung entspricht.

Die Verwendung einer zusätzlichen Lochrand-Bohrkrone hat den Vorteil, daß alle bisher bestehenden Hohlbohrkronen mit diesem Teil nachgerüstet werden können. Durch die abnehmbare Ausführung der Lochrand-Bohrkrone kann jedoch die Hohlbohrkrone auch in ihrem bisherigen Verwendungszweck problemlos weiter benützt werden. Insbesondere kann stets die einstückige Hohlbohrkrone mit einschraubbaren Schaft verwendet werden, die in ihrer massiven Ausführung für den profimäßigen Einsatz mit einer Bestückung mit Hartmetallschneidzähnen konzipiert ist. Der abschraubbare Einspannschaft kann an die verschiedenen Maschinentypen mit unterschiedlichen Werkzeugaufnahmen angepaßt werden.

Durch die Versetzung des Schneidzahns um einen bestimmten Abstand aus der normalen symmetrischen Lage nach vorn, weichen die Tangente und die Flächennormale auf die Schneidzahnfläche voneinander ab, so daß der Schneidzahn mit seiner Schneidfläche leicht nach außen zeigt und hierdurch die Späneabfuhr verbessert wird.

Weitere erfindungsgemäße Ausgestaltungen und Verbesserungen sind in den Unteransprüchen angegeben. Besonders vorteilhaft ist die Ausbildung der Anschlagsfläche mit tangential abgeschnittenen Kreissegmenten im Bereich der Schneidzähne. Hierdurch kann das Spangut unmittelbar in seinem Entstehungsbereich radial nach außen abgeführt werden.

Weitere Einzelheiten und Vorteile der Erfindung sind in den Zeichnungen dargestellt und in der nachfolgenden Beschreibung näher erläutert.

Es zeigen
- Fig. 1: eine prinzipielle Darstellung eines Ausführungsbeispiels der erfindungsgemäßen Fräskrone in explosionsartiger Darstellung,
- Fig. 2: einen Schnitt durch die Fräskrone bei der Herstellung einer Ausnehmung mit Randversenkung,
- Fig. 3: eine Draufsicht auf die zusätzlich zu verwendende Lochrand-Bohrkrone aus der Richtung des Pfeils X in Fig. 4 und
- Fig. 4: eine Seitenansicht mit Teilschnitten der Lochrand-Bohrkrone.

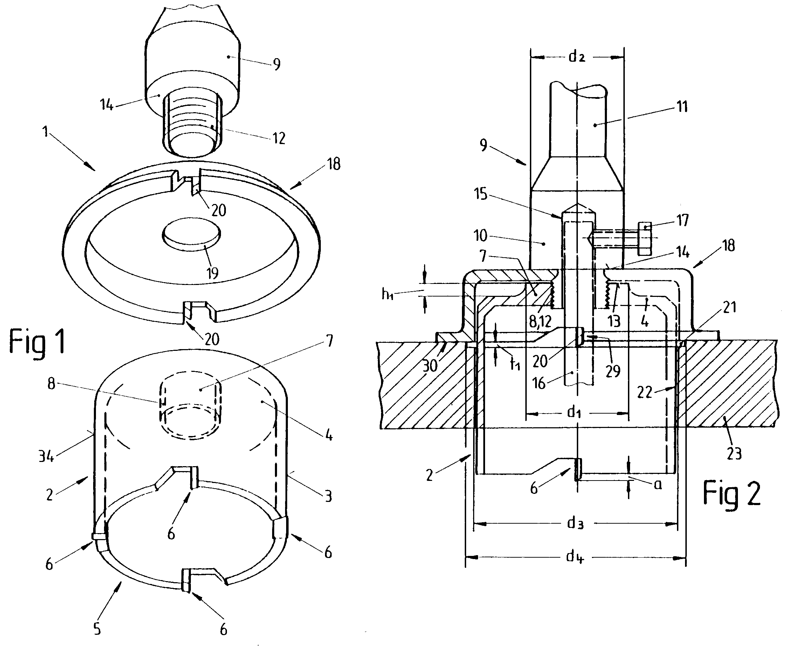

Die in der Fig. 1 in explosionsartiger Darstellung gezeigte Fräskrone 1 besteht aus einer an sich bekannten topfartig ausgebildeten Hohlbohrkrone 2 mit kreiszylindrischer Bohrkronenmantelfläche 3, die ohne Absatz und einstückig in den ebenen, kreiszylindrischen und geschlossenen Bohrkronenboden 4 übergeht. An der vorderen Stirnseite 5 ist die Hohlbohrkrone 2 mit vier Hartmetall-Schneidzähnen 6 versehen, die um 90° versetzt zueinander angeordnet sind und den vorderen Rand der Bohrkrone um den Betrag a überragen (siehe Fig. 2).

Der Boden 4 der Bohrkrone 2 weist einen in Fig. 1 schematisch und in Fig. 2 im Schnitt näher dargestellten kreiszylindrischen Aufnahmeflansch 7 mit Anschlußgewinde 8 zur Aufnahme eines auswechselbaren Maschinen-Einspannschaftes 9 auf. Der Aufnahmeflansch 7 hat eine kreiszylindrische Auflagefläche mit dem Durchmesser d₁, welcher etwa gleich groß oder größer ist als der Durchmesser d₂ des zylindrischen Anschlußteils 10 des Einspannschafts 9. Hieran schließt sich abgesetzt der an die jeweilige Maschine in seiner Formgebung angepaßte profilierte Einspannschaft 11 an. Dies kann beispielsweise ein Sechskant-Einspannschaft oder ähnliches sein. Die über den Boden 4 hinausragende Höhe des Aufnahmeflansches 7 ist mit h₁ bezeichnet.

Der Maschineneinspannschaft 9 kann direkt auf die Hohlbohrkrone 2 mit seinem Gewinde 12 in das Gewinde 8 eingeschraubt werden. In diesem Fall berühren sich beide Teile an ihren stirnseitigen Berührungsflächen 13, 14. Der Einspannschaft 9 weist weiterhin eine Zentralbohrung 15 auf, in die ein Zentrierbohrer 16 einsetzbar ist und mit einer Klemmschraube 17 axial gesichert festgelegt werden kann.

Die zuvor beschriebene an sich bekannte Hohlbohrkrone kann mittels der ergänzenden Lochrand-Bohrkrone 18 erweitert werden. Diese topfartig ausgebildete Lochrand-Bohrkrone wird zwischen der stirnseitigen Berührungsfläche 13 des Aufnahmeflansches 7 am Boden 4 der Hohlbohrkrone 2 und der stirnseitigen Fläche 14 des Einspannschaftes 9 eingelegt und durch die Drehbewegung bei der Festlegung des Gewindes 8, 12 verspannt. Das auf die Bohrkrone 2 einwirkende Bremsmoment und die von der Antriebsmaschine aufgebrachte Drehrichtung des Einspannschafts bewirken ein Verspannen der Lochrand-Bohrkrone zwischen den beiden Teilen 2, 9.

Dabei ragt der Gewindezapfen 12 des Einspannschaftes 9 durch eine Bohrung 19 der Lochrand-Bohrkrone 18 hindurch und greift in das Gewinde 8 des Aufnahmeflansches 7 ein.

An der Stirnseite der Lochrand-Bohrkrone 18 befinden sich im Ausführungsbeispiel nach Figuren 1 und 2 zwei gegenüberliegende Hartmetall-Schneidzähne 20, die zur Herstellung einer Randversenkung 21 auf dem bereits mit einer Bohrung 22 versehenen Werkstück 23 dienen. Dabei wird die Bohrung 22 mit dem Durchmesser d₃ durch die Hohlbohrkrone 2 und die sich unmittelbar hieran anschließende Randversenkung 21 mit dem Durchmesser d₄ durch die Lochrand-Bohrkrone 18 hergestellt. Die Tiefe t₁ der Randversenkung 21 wird durch die geometrische Anordnung des Schneidzahns 20 bestimmt, und zwar um den Betrag, um welchen der Schneidzahn 20 gegenüber der Anschlagsfläche 30 der Lochrand-Bohrkrone 18 hervorragt. Dieser Betrag ist geringfügig größer als die Dicke bzw. die Tiefe des nach außen abgewinkelten Flansches der Hohlwanddose, der in der Ausnehmung 21 Platz finden soll. Der Durchmesser d₄ entspricht demnach dem Außendurchmesser dieses abgewinkelten Flansches der Hohlwanddose. Der Durchmesser d₃ entspricht dem Außendurchmesser der Hohlwanddose selbst.

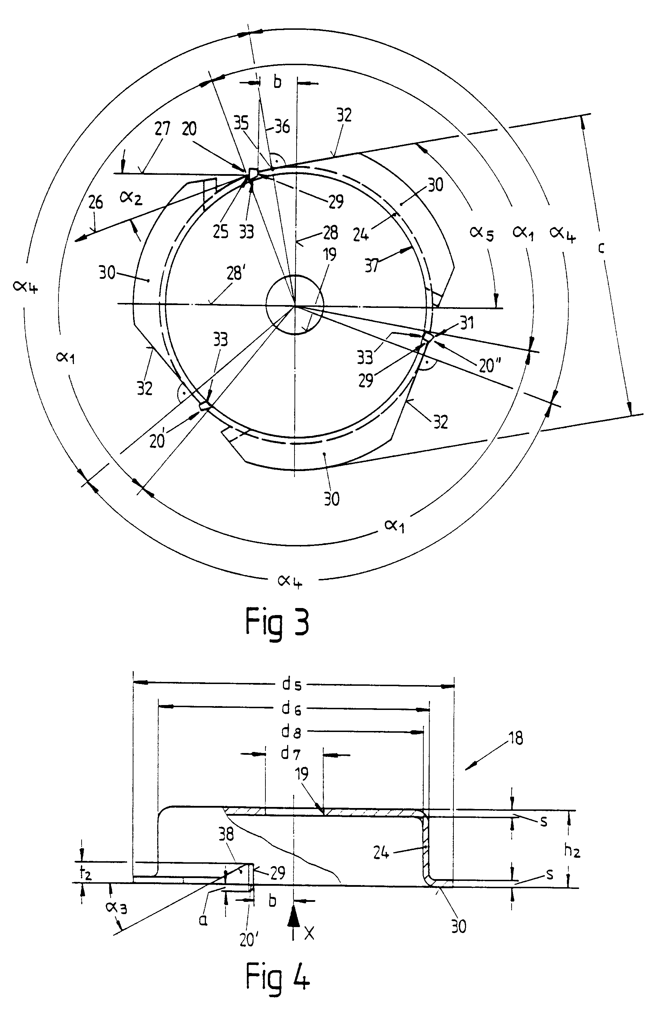

In den Figuren 3 und 4 ist die Lochrand-Bohrkrone in weiteren Einzelheiten dargestellt. Dabei sind gleiche Teile mit gleichen Bezugszeichen wie in Figuren 1 und 2 bezeichnet.

Die Ausführungsform nach Figuren 3 und 4 beinhaltet drei Schneidzähne 20, die um den Winkel α₁ = 120° am Umfang versetzt zueinander angeordnet sind. Jeder Schneidzahn 20 ist dabei in der Zylinderwandung 24 derart eingesetzt, daß seine zunächst radial ausgerichtete vordere Schneidfläche 25 um einen Betrag b nach vorn versetzt angeordnet ist, so daß die frontseitige Schnittfläche 25 eine von der Tangente 26 abweichende Flächennormale 27 aufweist, wobei der Abweichungswinkel α₂ ≅ 20° beträgt. Jeder Schneidzahn 20 ist deshalb mit seiner Schneidfläche 25 um den Winkel α₂ gegenüber der Tangente 26 nach außen gerichtet, d. h. der Schneidzahn 20 liegt nicht mit seiner Flächennormalen tangential zur Zylinderwandung 24. Bei der Herstellung der Schneidzähne geht man deshalb von einem normalen Achsenkreuz 28, 28' aus, und versetzt den ersten Zahn 20 bei gleicher Ausrichtung wie im Achsenkreuz um den Betrag b. Von hier aus folgen dann die übrigen Zähne 20' sowie 20'' Jeweils um α₁ = 120° versetzt.

Der Schneidzahn 20 wird an seiner Rückseite durch eine Abstützfläche 29 (Fig. 4) an der Zylinderwandung 24 abgestützt. Der vor dem Schneidzahn 20 liegende Spanraum 38 wird durch eine Einfräsung unter dem Winkel α₃ ≅ 30° hergestellt. Die Abstütztiefe des Schneidzahns 20 in der Zylinderwandung 24 beträgt t₂ ≅ 5,5 mm.

Wie aus Fig. 3 ersichtlich, ist die Anschlagsfläche 30 im Bereich der Schneidzähne 20 tangential zur Außenkante der Zylinderwandung 24 abgeschnitten, wobei die äußere Schneidzahnvorderkante 31 die Abschnittkante 32 überragt. Durch den außermittigen Versatz des Schneidzahns 20 um den Betrag b liegt die Innenfläche 33 des im Querschnitt trapezförmigen Schneidzahns 20 stets tangential an der Innenmantelfläche 37 der Zylinderwandung 24 und damit an der Außenmantelfläche 34 der Hohlbohrkrone 2 an.

Die Abschnittkante 32 wird derart gelegt, daß sie etwa tangential durch den Schneidzahn 20 führt. Im Ausführungsbeispiel nach Fig. 3 liegt dieser tangentiale Berührungspunkt 35 etwas hinter dem Schneidzahn 20'. Ausgehend von der Flächennormalen 36 auf diesen Punkt 35 werden die weiteren Abschnittkanten 32 in einem Versatzwinkel α₄ = 120° angebracht.

In Fig. 3 ist noch das Maß c ≅ 80 mm eingezeichnet, welches ebenfalls zur Bestimmung der Abschnittkante 32 vom Außendurchmesser d₅ herangezogen werden kann. Der Winkel α₅ zwischen der Abschnittkante 32 und dem horizontalen Achsenkreuz 28' beträgt α₅ ≅ 10°.

Durch die Abschnittkante 32 sowie durch die nach außen geneigten Schneidzähne 20 ist ein besonders günstiger Bohrmehltransport radial nach außen gewährleistet.

Durch die zurückgesetzte Anordnung der Schneidzähne 20 auf dem Durchmesser d₆ gegenüber dem Außendurchmesser d₅ der Anschlagsfläche 30 wird eine Verletzungsgefahr durch die Schneidzähne 20 vermieden.

Die Höhe h₂ der Lochrand-Bohrkrone 18 beträgt 20 mm, die Wandstärke s ≅ 2 mm. Der Außendurchmesser d₅ einschließlich Abstützfläche 30 beträgt d₅ ≅ 85 mm, der Topfdurchmesser d₆ ≅ 71 mm. Weiterhin beträgt der Bohrungsdurchmesser d₇ der Bohrung 19 d₇ ≅ 16 mm, der Innendurchmesser d₈ der Lochrand-Bohrkrone d₈ ≅ 67,6 mm. Der durch die Schneidzähne 20 hergestellte Außendurchmesser d₄ der Lochrandeinsenkung 21 ist in Fig. 2 dargestellt. Dieser ist an den Außendurchmesser der einzusetzenden Hohlwanddose angepaßt.

Die Erfindung ist nicht auf das beschriebene und dargestellte Ausführungsbeispiel beschränkt. Sie umfaßt auch vielmehr alle fachmännischen Weiterbildungen auch ohne eigenen erfinderischen Gehalt.

## Patentansprüche

1. Fräskrone zur Herstellung von kreiszylindrischen Wandungsausnehmungen oder Durchbrüchen und insbesondere zur Herstellung von Bohrungen für die Montage von Hohlwanddosen einer Elektroinstallation, mit einer topfförmig ausgebildeten, an der vorderen Stirnfläche Schneidzähne (6) aufweisenden, einstückigen Hohlbohrkrone (2), mit kreiszylindrischer Bohrkronenmantelfläche (3), die in einem ebenen, kreiszylindrischen und geschlossenen Bohrkronenboden (4) übergeht, wobei der Bohrkronenboden (4) zentrisch einen kreiszylindrischen Aufnahmeflansch (7) zur Aufnahme eines auswechselbaren Maschinen-Einspannschaftes (9) mit zentrischer Bohrung für einen Zentrierbohrer (16) aufweist und wobei zwischen der topfartigen Hohlbohrkrone (2) und dem abschraubbaren Einspannschaft (9) ein kreiszylindrischer Randversenker (18) aufsetzbar und zwischen Hohlbohrkrone (2) und Einspannschaft (9) form- oder kraftschlüssig verspannbar ist, dessen Schneidzähne (20) sich unmittelbar an der Zylindermantelfläche (3) der Hohlbohrkrone (2) anschließen, und gegenüber einer Tiefenanschlagfläche axial nach vorn um ein Maß hervorragen, dadurch gekennzeichnet, daß der Randversenker als zylinder- topfförmige Lochrand-Bohrkrone (18) ausgebildet ist, wobei die Lochrand-Bohrkrone (18) an ihrer vorderen Stirnseite (30) wenigstens zwei einzelne Schneidzähne (20) aus Hartmetall oder dergleichen aufweist, und daß die Schnittfläche (25) des Schneidzahnes (20) derart nach außen gedreht ist, daß die Flächennormale (27) auf die Schnittfläche (25) mit der Tangente (26) an die Zylinderwandung (24) einen Winkel α₂ ≈ 20° einschließt.

2. Fräskrone nach Anspruch 1, dadurch gekennzeichnet, daß die Lochrand-Bohrkrone (18) an ihrem vorderen Rand einen nach außen abgewinkelten, kreisförmigen Abstützflansch mit Anschlagsfläche (30) aufweist, wobei die Schneidzähne (20) die Anschlagsfläche (30) um das gewünschte Versenkmaß t₁ überragen.

3. Fräskrone nach Anspruch 1 oder 2, dadurch gekennnzeichnet, daß die kreisförmige Abstützfläche (30) im Bereich der Schneidzähne (20) tangential zur Zylinderwandung (24) der Lochrand-Bohrkrone (18) in einer Abschnittkante (32) abgeschnitten ist, wobei vorzugsweise die radial äußere Schneidzahnvorderkante (31) über die Abschnittkante (32) hinausragt.

4. Fräskrone nach einem oder mehreren der vorhergehenden Ansprüche 1 bis 3, dadurch gekennzeichnet, daß der Schneidzahn (20) in die Zylinderwandung (24) der Lochrand-Bohrkrone (18) derart eingesetzt ist, daß seine zunächst radial ausgerichtete vordere Schneidfläche (25) ohne Verdrehung um einen Betrag b ≅ 10 mm nach vorn versetzt ist, so daß die Schnittfläche (25) eine von der Tangente (26) abweichende Flächennormale (27) aufweist, wobei der Abweichungswinkel α₂ ≅ 20° beträgt.

5. Fräskrone nach einem oder mehreren der vorhergehenden Ansprüche 1 bis 4, dadurch gekennzeichnet, daß der Schneidzahn (20) gegenüber dem Außendurchmesser d₅ der Lochrand-Bohrkrone (18) radial nach innen versetzt angeordnet ist.

## Claims

1. Cutting crown for cutting circular cylindrical wall recesses or cavities and in particular for cutting holes for mounting cavity wall sockets of an electrical installation, with a cup-shaped integral hollow drill bit (2) provided with cutting teeth (6) on its front face, with circular cylindrical drill bit shell surface (3), which merges into a plane, circular cylindrical and enclosed drill bit base (4), said drill bit base (4) having at its centre a circular cylindrical flange (7) to receive a detachable machine chucking shank (9) with a central hole for a centre drill (16), and wherein a circular cylindrical edge countersink (18) may be attached between the cup-shaped hollow drill bit (2) and the detachable chucking shank (9) and may be clamped between the hollow drill bit (2) and the chucking shank (9) in a positive or non-positive manner, its cutting teeth (20) being connected directly to the cylinder shell surface (3) of the hollow drill bit (2) and projecting axially forwards in relation to a bit stop face by a dimension, characterized in that the edge countersink is provided in the form of a cylindrical, cup-shaped perforated edge drill bit (18), said perforated edge drill bit (18) having at least two single cutting teeth (20) made of hard metal or similar on its front face (30); and that the cutting surface (25) of the cutting tooth (20) is turned outwards in such a way that the surface normal (27) onto the cutting surface (25) forms an angle of α₂ ≈ 20° with the tangent (26) to the cylinder walls (24).

2. Cutting crown according to Claim 1, characterized in that on its front edge, the perforated edge drill bit (18) has a circular outwardly angled support flange with a stop face (30) and the cutting teeth (20) project over the stop face (30) by the desired countersink dimension t₁.

3. Cutting crown according to Claim 1 or 2, characterized in that in the area of the cutting teeth (20), the circular stop face (30) is cut away tangentially to the cylinder walls (24) of the perforated edge drill bit (18) at one edge (32), the radially outer cutting tooth front edge (31) preferably protruding over said edge (32).

4. Cutting crown according to one or several of the preceding Claims 1 to 3, characterized in that the cutting tooth (20) is inserted into the cylinder walls (24) of the perforated edge drill bit (18) in such a way that its initially radially aligned front cutting surface (25) is displaced forwards without turning by an amount b ≅ 10 mm so that the cutting surface (25) has a surface normal (27) deflecting from the tangent (26), in which case the angle of deflection amounts to α₂ ≅ 20°.

5. Cutting crown according to one or several of the preceding Claims 1 to 4, characterized in that the cutting tooth (20) is displaced radially inwards in relation to the outside diameter d₅ of the perforated edge drill bit (18).

## Revendications

1. Couronne de fraisage pour la réalisation d'évidements de parois ou de percements cylindriques circulaires et en particulier pour la réalisation de perçages pour le montage de prises de courant murales d'une installation électrique, comportant une couronne de forage creuse (2) en une seule pièce, réalisée sous forme de creuset, et munie sur la face frontale avant de dents de découpe (6), présentant une surface d'enveloppe (3) de couronne de forage cylindrique circulaire qui est raccordée à un fond de couronne de forage plan, cylindrique circulaire et fermé, le fond (4) de couronne de forage comportant au centre une bride de réception (7) cylindrique circulaire pour recevoir une tige de serrage (9) pour machines amovible, présentant un perçage central pour un foret à centrer (16), une mèche conique à bord (18) cylindrique circulaire pouvant être montée entre la couronne de forage creuse (2) en forme de creuset et la tige de serrage (9) qui peut être dévissée et pouvant être serrée de façon mécanique ou par force entre la couronne de forage creuse (2) et la tige de serrage (9), les dents de découpe (20) de la mèche étant raccordées directement à la surface d'enveloppe cylindrique (3) de la couronne de forage creuse (2) et faisant saillie d'une certaine longueur axialement vers l'avant par rapport à une surface de butée en profondeur,
caractérisée en ce que la mèche conique à bord est réalisée sous forme d'une couronne de forage de bord de trou (18) cylindrique en forme de creuset, la couronne de forage de bord de trou (18) comportant sur sa face frontale avant (30) au moins deux dents de découpe individuelles (20) en métal dur ou analogue, et en ce que la face de coupe (25) de la dent de découpe (20) est tournée vers l'extérieur de sorte que la normale (27) à la face de coupe (25) forme un angle α₂ ≃ 20° avec la tangente (26) à la paroi cylindrique (24).

2. Couronne de fraisage selon la revendication 1, caractérisée en ce que la couronne de forage de bord de trou (18) comporte à son bord avant une bride d'appui circulaire cintrée vers l'extérieur avec des surfaces de butée (30), les dents de découpe (20) faisant saillie au-delà de la surface de butée (30) de la valeur de fraisage souhaitée t₁.

3. Couronne de fraisage selon l'une des revendications 1 ou 2,
caractérisée en ce que la surface d'appui circulaire (30) est formée dans la zone des dents de découpe (20) de façon tangentielle à la paroi cylindrique (24) de la couronne de forage de bord de trou (18) en une arête de découpe (32), l'arête avant (31) radialement externe de la dent de découpe faisant de préférence saillie au-delà de l'arête de découpe (32).

4. Couronne de fraisage selon l'une ou plusieurs des revendications précédentes 1 à 3,
caractérisée en ce que la dent de découpe (20) est montée dans la paroi cylindrique (24) de la couronne de forage de bord de trou (18) de sorte que sa face de coupe avant (25) dirigée tout d'abord radialement est décalée vers l'avant sans rotation d'une valeur b ≃ 10 mm de sorte que la face de coupe (25) présente une normale (27) s'écartant de la tangente (26), l'angle d'écartement correspondant à α₂ ≃ 20°.

5. Couronne de fraisage selon l'une ou plusieurs des revendications précédentes 1 à 4,
caractérisée en ce que la dent de découpe (20) est agencée de façon décalée radialement vers l'intérieur par rapport au diamètre externe d₅ de la couronne de forage de bord de trou (18).
